# EUROPÄISCHE PATENTSCHRIFT

(11) **EP 3 595 836 B1**
(45) Veröffentlichungstag und Bekanntmachung des Hinweises auf die Patenterteilung: **07.05.2025**
(21) Anmeldenummer: 18712168.6
(22) Anmeldetag: 15.03.2018
(51) Int. Cl.: B23C 5/10, B24B 3/06

(54) **FRÄSKOPF FÜR EINEN KUGELBAHNFRÄSER, KUGELBAHNFRÄSER MIT EINEM SOLCHEN FRÄSKOPF, VERFAHREN ZUM HERSTELLEN EINER SCHNEIDKANTE FÜR EINEN KUGELBAHNFRÄSER, COMPUTERPROGRAMMPRODUKT ZUR DURCHFÜHRUNG EINES SOLCHEN VERFAHRENS, DATENTRÄGER MIT EINEM SOLCHEN COMPUTERPROGRAMMPRODUKT, UND SCHLEIFMASCHINE ZUR DURCHFÜHRUNG DES VERFAHRENS**
MILLING HEAD FOR A BALL TRACK MILLING CUTTER, BALL TRACK MILLING CUTTER HAVING A MILLING HEAD OF THIS TYPE, METHOD FOR PRODUCING A CUTTING EDGE FOR A BALL TRACK MILLING CUTTER, COMPUTER PROGRAM PRODUCT FOR CARRYING OUT A METHOD OF THIST TYPE, DATA CARRIER HAVING A COMPUTER PROGRAM PRODUCT OF THIS TYPE, AND GRINDING MACHINE FOR CARRYING OUT THE METHOD
TÊTE DE FRAISAGE POUR UNE FRAISE DE VOIES DE ROULEMENTS À BILLES, FRAISE DE VOIES DE ROULEMENTS À BILLES ÉQUIPÉE D'UNE TÊTE DE FRAISAGE DE CE TYPE, PROCÉDÉ SERVANT À FABRIQUER UNE ARÊTE TRANCHANTE POUR UNE FRAISE DE VOIES DE ROULEMENTS À BILLES, PRODUIT-PROGRAMME INFORMATIQUE SERVANT À EXÉCUTER UN PROCÉDÉ DE CE TYPE, SUPPORT DE DONNÉES COMPRENANT UN PRODUIT-PROGRAMME INFORMATIQUE DE CE TYPE, ET MACHINE DE RECTIFICATION SERVANT À EXÉCUTER LE PROCÉDÉ

(30) Priorität: 16.03.2017 DE 102017204369; 10.04.2017 DE 102017206144
(43) Veröffentlichungstag der Anmeldung: 22.01.2020
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Kordel, Mattias
(86) Internationale Anmeldenummer: PCT/EP2018/056588
(87) Internationale Veröffentlichungsnummer: WO 2018/167234

(56) Entgegenhaltungen:
- EP-A1- 0 456 253
- EP-A1- 2 913 132
- EP-A2- 1 577 055
- DE-A1- 102009 015 014
- DE-A1- 102011 012 140
- DE-A1- 102014 208 125
- JP-A- H06 218 612
- US-A1- 2011 211 922

## Beschreibung

Die Erfindung betrifft einen Fräskopf für einen Kugelbahnfräser gemäß dem Oberbegriff des Anspruchs 1, einen Kugelbahnfräser mit einem solchen Fräskopf, ein Verfahren zum Herstellen einer Schneidkante für einen Kugelbahnfräser, ein Computerprogrammprodukt zur Durchführung eines solchen Verfahrens, einen Datenträger mit einem solchen Computerprogrammprodukt, und eine Schleifmaschine zur Durchführung des Verfahrens. Ein solcher Fräskopf, ein solcher Kugelbahnfräser und ein solches Verfahren sind aus der EP 2 913 132 A1 bekannt.

Ein Kugelbahnfräser der hier angesprochenen Art ist beispielsweise aus der deutschen Offenlegungsschrift DE 10 2014 208 125 A1 bekannt. Ein Fräskopf eines solchen Kugelbahnfräsers weist eine gedachte Mittelachse sowie ein erstes, arbeitsseitiges Ende und ein zweites, dem ersten Ende entlang der Mittelachse gesehen gegenüberliegendes, einspannseitiges Ende auf. Der Fräskopf weist außerdem wenigstens eine geometrisch definierte Schneidkante auf, die sich ausgehend von einem dem ersten Ende des Fräskopfs zugewandten, ersten Schneidkantenende in Richtung des zweiten Endes des Fräskopfs bis zu einem zweiten, dem zweiten Ende des Fräskopfs zugewandten Schneidkantenende entlang eines Schneidkantenverlaufs erstreckt. Die wenigstens eine Schneidkante ist dabei gebildet als Schnittlinie zwischen einer Spanfläche und einer Freifläche, die der Schneidkante jeweils zugeordnet sind, und die sich entlang der Schneidkante schneiden. Der wenigstens einen Schneidkante sind außerdem ein negativer Spanwinkel, ein erster Freiwinkel und ein Keilwinkel zugeordnet.

Bekannte Fräsköpfe weisen eine begrenzte Standzeit auf, wobei insbesondere bei längerem Einsatz im Bereich der wenigstens einen Schneidkante scharfe Kanten entstehen, die wiederum zu Ausbrüchen entlang des Schneidkantenverlaufs führen. Dabei ist der Verschleiß nicht gleichmäßig entlang des Schneidkantenverlaufs verteilt, sondern weist vielmehr ein ausgeprägtes Abnutzungsprofil auf. Dabei verschleißt die wenigstens eine Schneidkante in dem Bereich des zweiten Schneidkantenendes deutlich schneller und stärker als im Bereich des ersten Schneidkantenendes.

Der Erfindung liegt die Aufgabe zugrunde, einen Fräskopf für einen Kugelbahnfräser, einen Kugelbahnfräser mit einem solchen Fräskopf, ein Verfahren zum Herstellen einer Schneidkante für einen Kugelbahnfräser, ein Computerprogrammprodukt zur Durchführung eines solchen Verfahrens, einen Datenträger mit einem solchen Computerprogrammprodukt, und eine Schleifmaschine zur Durchführung des Verfahrens zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Fräskopf für einen Kugelbahnfräser gemäß dem Anspruch 1 geschaffen wird, wobei der negative Spanwinkel im Bereich des ersten Schneidkantenendes, insbesondere an dem ersten Schneidkantenende, einen anderen Wert aufweist als im Bereich des zweiten Schneidkantenendes, insbesondere an dem zweiten Schneidkantenende. Der erste Freiwinkel weist ebenfalls im Bereich des ersten Schneidkantenendes, insbesondere an dem ersten Schneidkantenende, einen anderen Wert auf als im Bereich des zweiten Schneidkantenendes, insbesondere an dem zweiten Schneidkantenende. Der Keilwinkel ist entlang des Schneidkantenverlaufs konstant. Während sich also der Keilwinkel entlang des Schneidkantenverlaufs von dem ersten Schneidkantenende zu dem zweiten Schneidkantenende nicht verändert, weisen der negative Spanwinkel einerseits und der Freiwinkel andererseits im Bereich des ersten Schneidkantenendes jeweils einen Wert auf, der von einem Wert verschieden ist, der im Bereich des zweiten Schneidkantenendes gegeben ist. Auf diese Weise ist die geometrische Ausgestaltung der wenigstens einen Schneidkante in verschiedenen Bereichen entlang ihres Schneidkantenverlaufs auf eine jeweilige momentane Eingriffsituation während der Bearbeitung eines Werkstücks angepasst, wodurch der Verschleiß der Schneidkante reduziert und vorzugsweise Vibrationen während der Bearbeitung des Werkstücks verringert werden. Auch dies trägt zu einer höheren Standzeit des Fräskopfs bei. Fräsköpfe sowie Kugelbahnfräser der hier angesprochenen Art werden insbesondere zur Herstellung von Gelenken von Gelenkwellen, ganz besonders zur Herstellung von Kugellaufflächen von homokinetischen Gelenken, eingesetzt. Sie dienen insbesondere dazu, sowohl in einem Außenteil eines solchen Gelenks als auch in dessen Innenteil Kugellaufflächen, die auch als Kugelbahnen bezeichnet werden, herzustellen. Dabei wird ein solcher Fräskopf zur Bearbeitung einer Kugellauffläche unter einem bestimmten Anstellwinkel relativ zu einem zu bearbeitenden Werkstück angestellt. Als Anstellwinkel wird der Winkel bezeichnet, den die gedachte Mittelachse des Fräskopfs gegenüber einer Tangente einnimmt, die an einen momentanen Berührungspunkt der Schneidkante des Fräskopfs mit der Werkstückoberfläche angelegt ist. Die wenigstens eine Schneidkante berührt dabei das zu bearbeitende Werkstück punktförmig oder zumindest ungefähr punktförmig im Bereich des Berührungspunkts, wobei dieser während der Bearbeitung des Werkstücks auf der Schneidkante nicht konstant ist, sondern vielmehr entlang des Schneidkantenverlaufs verlagert wird. Dies ergibt sich insbesondere einerseits aus dem endlichen Anstellwinkel des Fräskopfs und andererseits aus der spezifischen Relativbewegung zwischen dem Fräskopf und dem zu bearbeitenden Werkstück, welche zur Erzeugung einer Kugellauffläche in dem Werkstück vorgesehen ist. Dabei erfolgt einerseits eine Relativdrehung um die gedachte Mittelachse zur Erzeugung der Kugellauffläche entlang einer gedachten Umfangslinie, und andererseits eine geeignete Relativverlagerung zwischen dem Werkstück und dem Fräskopf zur Erzeugung der Kugellauffläche entlang einer Längserstreckung derselben - senkrecht zu der gedachten Umfangslinie. Besonders bevorzugt wird der Fräskopf um die gedachte Mittelachse rotiert, während zugleich das Werkstück - vorzugsweise in einer elliptischen Bewegung - derart um die gedachte Mittelachse des Fräskopfs herumgeführt wird, dass die Kugellauffläche insgesamt entlang ihrer Längserstreckung ausgebildet wird. Während der Bearbeitung der Kugellauffläche taucht die wenigstens eine Schneidkante ausgehend von dem ersten Schneidkantenende in das zu bearbeitende Material des Werkstücks ein, wobei sich der Berührungspunkt auf der Schneidkante im weiteren Verlauf der Bearbeitung von dem ersten Schneidkantenende in Richtung des zweiten Schneidkantenendes verlagert. Dort, wo die Schneidkante in das Material der insbesondere halbrund ausgestalteten Kugellauffläche eintaucht, und dort, wo sie aus diesem Material wieder austaucht, entstehen Sprünge in der aufzubringenden Schnittkraft, die auch als Schnittkraftunterbrechungen bezeichnet werden, und die zu unerwünschten Schwingungen des Fräskopfs beitragen. Dies wirkt sich negativ sowohl auf die Spanbildung als auch auf die Standzeit aus. Die hier vorgeschlagene, angepasste Geometrie der wenigstens einen Schneidkante ermöglicht deren Abstimmung auf die Verlagerung des Berührungspunkts im Laufe der Werkstückbearbeitung und zugleich eine Reduzierung der zuvor beschriebenen Schwingungen, sodass insgesamt die Standzeit des Fräskopfs verbessert ist.

Es ist möglich, dass der Fräskopf nur eine und genau eine geometrisch definierte Schneidkante aufweist. Es ist allerdings bei einem anderen Ausführungsbeispiel auch möglich, dass der Fräskopf eine Mehrzahl geometrisch definierter Schneidkanten, insbesondere zwei geometrisch definierte Schneidkanten, drei geometrisch definierte Schneidkanten, vier geometrisch definierte Schneidkanten oder fünf geometrisch definierte Schneidkanten aufweist. Selbstverständlich ist auch eine größere Zahl geometrisch definierter Schneidkanten möglich. Ganz besonders bevorzugt weist der Fräskopf allerdings vier geometrisch definierte Schneidkanten auf. Bevorzugt sind alle an dem Fräskopf vorgesehenen geometrisch definierten Schneidkanten identisch und insbesondere so ausgebildet, wie dies hier und im Folgenden für die wenigstens eine geometrisch definierte Schneidkante erläutert ist.

Der Fräskopf kann einstückig mit weiteren Elementen eines Kugelbahnfräsers, insbesondere mit einem Kugelbahnfräser-Grundkörper, ausgebildet sein, sodass es sich hierbei insbesondere um einen Fräskopf eines Kugelbahnfräsers handelt. Er kann aber auch mehrteilig mit den restlichen Teilen des Kugelbahnfräsers ausgebildet sein, wobei er beispielsweise mit dem Kugelbahnfräser-Grundkörper über eine Schnittstelle, beispielsweise mittels eines Gewindes mit sich anschließendem Zentrierkonus und einer den Zentrierkonus in Umfangsrichtung umgebenden Planfläche zur lagegenauen Fixierung des Fräskopfs an dem Kugelbahnfräser-Grundkörper, verbunden werden kann. Solche einstückigen und auch mehrteiligen Ausgestaltungen, insbesondere auch entsprechende Schnittstellen, sind für sich genommen bekannt, sodass hierauf nicht detailliert eingegangen wird.

Unter einem arbeitsseitigen Ende des Fräskopfs wird insbesondere dasjenige Ende - entlang der gedachten Mittelachse gesehen - verstanden, welches während einer Bearbeitung eines Werkstücks durch den Fräskopf bestimmungsgemäß dem Werkstück zugewandt ist. Unter einem einspannseitigen Ende des Fräskopfs wird demgegenüber ein - entlang der Mittelachse gesehen - bei der Bearbeitung eines Werkstücks bestimmungsgemäß dem Werkstück abgewandtes Ende verstanden, wobei dieses Ende einem Einspannabschnitt des Fräskopfs oder des Kugelbahnfräsers zugeordnet ist. Wie bereits erläutert, kann der Fräskopf mit dem Einspannabschnitt mit einem Kugelbahnfräser-Grundkörper verbunden werden. Der Kugelbahnfräser kann seinerseits mit einem geeignet ausgebildeten Einspannabschnitt mit weiteren Werkzeugelementen, beispielsweise Adaptern, Zwischenstücken, Verlängerungen oder dergleichen, oder direkt mit einer Maschinenspindel verbunden werden. Hierzu kann der Kugelbahnfräser insbesondere einen Spannschaft aufweisen, der geeignet ist, in ein weiteres Werkzeugteil und/oder eine Maschinenspindel eingespannt zu werden. Ein solcher Spannschaft kann beispielsweis zylindrisch, konisch, beispielsweise als Morsekegel oder als Hohlschaftkegel (HSK), ausgebildet sein.

Dass die Spanfläche der wenigstens einen Schneidkante zugeordnet ist, bedeutet insbesondere, dass sich die Spanfläche unmittelbar an die wenigstens eine Schneidkante anschließt. Entsprechend schließt sich auch die erste Freifläche unmittelbar an die Schneidkante an. Dies ergibt sich insbesondere auch daraus, dass die Schneidkante als Schnittlinie der Spanfläche mit der ersten Freifläche ausgebildet ist.

Dass der wenigstens einen Schneidkante ein negativer Spanwinkel zugeordnet ist, bedeutet insbesondere, dass die Spanfläche einen negativen Spanwinkel aufweist. Ein solcher negativer Spanwinkel ist insbesondere vorteilhaft zur Bearbeitung harter Werkstoffe, die mit einem Schneidstoff von großer Härte und Temperaturbeständigkeit bearbeitet werden. Typischerweise werden Werkstücke der hier angesprochenen Art in bereits gehärteter Form zerspanend mit dem Fräskopf bearbeitet. Mithilfe eines negativen Spanwinkels lassen sich höhere Schnittkräfte und kürzere Späne realisieren. Geeignete, harte Schneidstoffe haben aufgrund ihrer inneren kristallinen Struktur die Eigenschaft, gegenüber Druckspannungen beständig zu sein, die bei einem negativen Spanwinkel auftreten. Gleichzeitig besitzen sie eine große Härte und Temperaturbeständigkeit. Dagegen würde ein positiver Spanwinkel bei der Spanbrechung eine Zugspannung erzeugen, was einen entsprechenden, harten Schneidstoff jedoch sehr schnell versagen lassen würde. Solche harten Schneidstoffe weisen nämlich ein schlechtes Verhalten in Reaktion auf Zugspannungen auf, insbesondere einen geringen inneren Widerstand des Materials auf Zug. Deswegen neigen sie bei positiven Spanwinkeln leicht zu Ausbrüchen auf der Schneidkante.

Weiterhin ist zu beachten, dass der Keilwinkel zur Bearbeitung harter, spröder Werkstoffe möglichst groß gewählt werden soll, um die nötige Stabilität bei der spanenden Bearbeitung von Werkstoffen mit hoher Festigkeit und Härte garantieren zu können.

Der Spanwinkel ist ein Winkel, den die Spanfläche mit einer gedachten Ebene einschließt, in der die Schneidkante verläuft, und die lokal senkrecht auf einer durch die Schneidkante bearbeiteten Werkstückfläche steht. Der Spanwinkel weist dabei einen positiven Wert auf, wenn die Spanfläche relativ zu der gedachten Eben - entgegen der Bearbeitungsrichtung gesehen - zurückgesetzt ist, also der Schneidkante nachläuft, während der Spanwinkel mit negativem Vorzeichen behaftet ist, wenn die Spanfläche - in Bearbeitungsrichtung gesehen - der Schneidkante vorläuft, also in Bearbeitungsrichtung vor der gedachten Ebene angeordnet ist.

Der Freiwinkel ist ein Winkel, den die Freifläche mit einer bearbeiteten Werkstückebene oder einer im Bereich der Schneidkante an das bearbeitete Werkstück angelegten Tangentialebene einschließt, wobei die Schneidkante auch in dieser Werkstückebene oder Tangentialebene liegt. Die zur Ermittlung des Freiwinkels herangezogene Werkstückebene oder Tangentialebene einerseits und die zur Ermittlung des Spanwinkels herangezogene gedachte Ebene stehen senkrecht aufeinander und schneiden sich in der Schneidkante. Der Freiwinkel sorgt insbesondere dafür, dass der Fräskopf auf der bearbeiteten Werkstückoberfläche freikommt, wobei die Reibung und Erwärmung zwischen der Schneidkante und dem bearbeiteten Werkstoff minimiert wird.

Der Keilwinkel ist der Winkel, welchen die Spanfläche einerseits und die erste Freifläche andererseits miteinander einschließen.

Es gilt die generelle Regel, dass der Spanwinkel - unter Berücksichtigung des ihm zugewiesenen Vorzeichens -, der erste Freiwinkel und der Keilwinkel sich stets zu 90° - bezogen auf einen Vollkreis von 360° - aufaddieren.

Der Keilwinkel kann also aus dem Spanwinkel - unter Berücksichtigung von dessen Vorzeichen - und dem ersten Freiwinkel berechnet werden. Umgekehrt ergibt sich der erste Freiwinkel aus dem Keilwinkel und dem Spanwinkel.

Gemäß einer Weiterbildung der Erfindung ist vorgesehen, dass entlang des Schneidkantenverlaufs keine zwei voneinander verschiedenen Punkte auf der wenigstens einen Schneidkante existieren, an denen die wenigstens eine Schneidkante identische Beträge für den Spanwinkel und/oder identische erste Freiwinkel aufweist. Dies bedeutet insbesondere, dass der Betrag des negativen Spanwinkels und/oder der erste Freiwinkel in keinen zwei verschiedenen Punkten entlang des Schneidkantenverlaufs auf der Schneidkante gleich ist/sind. Der Betrag des negativen Spanwinkels ist also in jedem Punkt entlang des Schneidkantenverlaufs verschieden. Alternativ oder zusätzlich ist der Freiwinkel in jedem Punkt entlang des Schneidkantenverlaufs verschieden. Dies führt zu einer besonders günstigen geometrischen Schneidgeometrie zur Verringerung von während der Bearbeitung eines Werkstücks auftretenden Schwingungen und zur Erhöhung der Standzeit des Fräskopfs.

Gemäß einer Weiterbildung der Erfindung ist vorgesehen, dass der Betrag des negativen Spanwinkels und/oder der erste Freiwinkel kontinuierlich entlang des Schneidkantenverlaufs variiert/variieren. Unter einer kontinuierlichen Variation wird dabei insbesondere eine stetige Veränderung, ganz besonders eine stetige und differenzierbare Veränderung, der Werte für den Betrag des Spanwinkels und/oder den ersten Freiwinkel verstanden, wobei insbesondere keine Sprünge in den entsprechenden Werten auftreten. Besonders bevorzugt verändert/verändern sich der Betrag des negativen Spanwinkels und/oder der erste Freiwinkel entlang des Schneidkantenverlaufs der wenigstens einen Schneidkante linear. Somit werden abrupte Veränderungen der Schneidgeometrie vermieden, was sich günstig auf die Vermeidung von Schwingungen und eine erhöhte Standzeit des Fräskopfs auswirkt.

Gemäß einer Weiterbildung der Erfindung ist vorgesehen, dass der Betrag des negativen Spanwinkels im Bereich des ersten Schneidkantenendes, insbesondere an dem ersten Schneidkantenende, kleiner ist als im Bereich des zweiten Schneidkantenendes, insbesondere an dem zweiten Schneidkantenende. Alternativ oder zusätzlich ist bevorzugt vorgesehen, dass der erste Freiwinkel im Bereich des ersten Schneidkantenendes, insbesondere an dem ersten Schneidkantenende, kleiner ist als im Bereich des zweiten Schneidkantenendes, insbesondere an dem zweiten Schneidkantenende. Auf diese Weise wird die Widerstandsfähigkeit und Stabilität der Schneidgeometrie so abgestimmt, dass die wenigstens eine Schneidkante entlang ihres Schneidkantenverlaufs dort eine höhere Stabilität aufweist, wo sie ansonsten einem erhöhten Verschleiß unterliegen würde, wobei sie zugleich dort, wo sie typischerweise einen geringeren Verschleiß aufweist, schnittfreudiger ausgestaltet ist. Somit kann insbesondere der Verschleiß über den Verlauf der Schneidkante vereinheitlicht werden, wodurch insgesamt die Standzeit des Freikopfs erhöht wird. Der entlang des Schneidkantenverlaufs konstante Keilwinkel sorgt dafür, dass die Stabilität und Standfestigkeit der Schneidgeometrie an keiner Stelle des Schneidkantenverlaufs durch einen reduzierten Keilwinkel vermindert ist.

Durch die Veränderung des negativen Spanwinkels und des Freiwinkels entlang des Schneidkantenverlaufs einerseits und den konstanten Keilwinkel andererseits wird quasi die Schneidgeometrie im Verlauf der Schneidkante von dem ersten Schneidkantenende zu dem zweiten Schneidkantenende - im Querschnitt gesehen - gedreht. Insbesondere die Spanfläche weist aufgrund der Verläufe des Spanwinkels und des Freiwinkels einen verdrillten Verlauf entlang der Schneidkante auf, wobei ein Normalenvektor der Spanfläche quasi im Verlauf der Schneidkante von dem ersten Schneidkantenende hin zu dem zweiten Schneidkantenende in Richtung eines äußeren Umfangs des Fräskopfs verdreht wird. Dies erzeugt eine erhöhte Stabilität der Schneidgeometrie insbesondere im Bereich des zweiten Schneidkantenendes, also dort, wo bei konventionellen Fräsköpfen ein erhöhter Verschleiß auftritt.

Gemäß einer Weiterbildung der Erfindung ist vorgesehen, dass der Betrag des negativen Spanwinkels entlang des Schneidkantenverlaufs - insbesondere von dem ersten Schneidkantenende zu dem zweiten Schneidkantenende - im gleichen Maß zunimmt, in welchem auch der erste Freiwinkel zunimmt. Der Betrag des Spanwinkels nimmt also insbesondere im gleichen Verhältnis wie der Wert des ersten Freiwinkels zu.

Zur Klarstellung sei hinzugefügt, dass der - überall im Schneidkantenverlauf - negative Spanwinkel unter Berücksichtigung seines Vorzeichens immer kleiner wird, also zu stärker negativen Werten hin verändert wird, wenn sein Betrag von dem ersten Schneidkantenende ausgehend in Richtung des zweiten Schneidkantenendes zunimmt.

Gemäß der Erfindung ist vorgesehen, dass eine Breite der Spanfläche im Bereich des ersten Schneidkantenendes, insbesondere an dem ersten Schneidkantenende, größer ist als im Bereich des zweiten Schneidkantenendes, insbesondere an dem zweiten Schneidkantenende. Dabei verändert sich die Breite der Spanfläche vorzugsweise entlang des Schneidkantenverlaufs kontinuierlich von dem ersten Schneidkantenende zu dem zweiten Schneidkantenende, besonders bevorzugt linear mit dem Schneidkantenverlauf. Insbesondere nimmt die Breite der Spanfläche bevorzugt von dem ersten Schneidkantenende zu dem zweiten Schneidkantenende kontinuierlich, insbesondere linear ab. Dies ergibt sich bei gegebener Kontur der Schneidkante, also bei vorbestimmtem Schneidkantenverlauf aus der Entwicklung des Spanwinkels einerseits und des ersten Freiwinkels andererseits entlang des Schneidkantenverlaufs.

Die hier vorgeschlagene, bezüglich ihrer Breite variable und entlang ihres Verlaufs verdrillte Spanfläche wird auch als nachgeführte Negativfase bezeichnet. Sie ermöglicht insbesondere im Bereich des zweiten Schneidkantenendes eine erhöhte Stabilität der Schneidgeometrie und somit eine verbesserte Standzeit des Fräskopfs bei zugleich reduzierten Schwingungen.

Gemäß einer Weiterbildung der Erfindung ist vorgesehen, dass die Breite der Spanfläche im Bereich des ersten Schneidkantenendes höchstens 0,4 mm, vorzugsweise höchstens 0,3 mm beträgt, wobei die Breite der Spanfläche im Bereich des zweiten Schneidkantenendes mindestens 0,1 mm, vorzugsweise mindestens 0,15 mm beträgt. Bei diesen Werten realisieren sich in besonderer Weise die bereits beschriebenen Vorteile.

Gemäß einer Weiterbildung der Erfindung ist vorgesehen, dass der Schneidkantenverlauf gerade, gekrümmt und/oder spiralig ausgebildet ist. Der Schneidkantenverlauf kann dabei insbesondere parallel zu der gedachten Mittelachse ausgerichtet sein, oder einen endlichen Winkel mit der gedachten Mittelachse einschließen. Dabei ist es möglich, dass dieser Winkel entlang des Schneidkantenverlaufs variiert oder konstant ist. Die hier beschriebene Ausgestaltung des Schneidkantenverlaufs bezieht sich insbesondere auf eine gedachte Projektion des tatsächlichen Schneidkantenverlaufs im Raum auf eine gedachte, zylindrische Umfangsfläche, die sich konzentrisch um die Mittelachse erstreckt. Tatsächlich ist der Schneidkantenverlauf stets deswegen gekrümmt, weil der Fräskopf zumindest im Bereich der wenigstens einen Schneidkante halbkugelförmig oder ungefähr halbkugelförmig ausgebildet ist. Diese Krümmung verschwindet aber bei einer Projektion auf eine gedachte, zylindrische Umfangsfläche um die Mittelachse, sodass in dieser Projektion besonders einfach beurteilt werden kann, ob die Schneidkante parallel zur Mittelachse ausgerichtet, mit einem Winkel zur Mittelachse angestellt oder spiralig um die Mittelachse herum ausgebildet ist.

Der Fräskopf weist also insgesamt zumindest im Bereich seines arbeitsseitigen Ende eine hemisphärische oder zumindest ungefähr hemisphärische Geometrie auf, deren Krümmung die wenigstens eine Schneidkante folgt, wobei insbesondere auf diese Weise eine Kugellaufbahn herstellbar ist, insbesondere mit einem Durchmesser, der dem Durchmesser der gedachten Hemisphäre entspricht.

Gemäß einer Weiterbildung der Erfindung ist vorgesehen, dass der Betrag des negativen Spanwinkels im Bereich des ersten Schneidkantenendes, insbesondere an dem ersten Schneidkantenende, von wenigstens 10° bis höchstens 19°, vorzugsweise von wenigstens 12° bis höchstens 17°, vorzugsweise von wenigstens 14° bis höchstens 16°, vorzugsweise 15° beträgt. Alternativ oder zusätzlich beträgt der Betrag des negativen Spanwinkels im Bereich des zweiten Schneidkantenendes, insbesondere an dem zweiten Schneidkantenende, bevorzugt von wenigstens 20° bis höchstens 30°, vorzugsweise von wenigstens 22° bis höchstens 28°, vorzugsweise von wenigstens 24° bis höchstens 26°, vorzugsweise 25°.

Alternativ oder zusätzlich beträgt der erste Freiwinkel im Bereich des ersten Schneidkantenendes, insbesondere an dem ersten Schneidkantenende, von wenigstens 5° bis höchstens 10°, vorzugsweise von wenigstens 6° bis höchstens 8°, vorzugsweise 7°. Alternativ oder zusätzlich beträgt der erste Freiwinkel vorzugsweise im Bereich des zweiten Schneidkantenendes, vorzugsweise an dem zweiten Schneidkantenende, von wenigstens 15° bis höchstens 20°, vorzugsweise von wenigstens 16° bis höchstens 18°, vorzugsweise 17°.

Bei den hier angegebenen Werten für den Betrag des negativen Spanwinkels und/oder den ersten Freiwinkel verwirklichen sich in besonderer Weise die bereits zuvor beschriebenen Vorteile des Fräskopfs.

Gemäß einer Weiterbildung der Erfindung ist vorgesehen, dass sich an die erste Freifläche umfangsseitig eine zweite Freifläche anschließt, der ein zweiter Freiwinkel zugeordnet ist. Dabei bezieht sich der Begriff "umfangsseitig" insbesondere auf eine Umfangslinie, welche die gedachte Mittelachse konzentrisch umgreift. Die zweite Freifläche ist dabei insbesondere der ersten Freifläche unmittelbar benachbart, wobei die erste Freifläche zwischen der Schneidkante und der zweiten Freifläche angeordnet ist.

Vorzugsweise ist der zweite Freiwinkel überall entlang des Schneidkantenverlaufs größer als der erste Freiwinkel.

Gemäß einer Weiterbildung der Erfindung ist vorgesehen, dass der zweite Freiwinkel entlang des Schneidkantenverlaufs konstant ist. Insbesondere beträgt er bevorzugt von wenigstens 16° bis höchstens 21°, vorzugsweise von wenigstens 17° bis höchstens 19°, vorzugsweise 18°.

Die zweite Freifläche, die insbesondere im Vergleich zu der ersten Freifläche - entgegen der Bearbeitungsrichtung gesehen - stärker abfällt, ermöglicht bei gleichbleibend stabiler Schneidgeometrie eine verbesserte Freistellung und verringerte Reibung sowie Erwärmung zwischen der Schneide und dem bearbeiteten Werkstoff.

Gemäß einer Weiterbildung der Erfindung ist vorgesehen, dass der Fräskopf einen Grundkörper aufweist. Dabei ist es möglich, dass die wenigstens eine Schneidkante unmittelbar an dem Grundkörper ausgebildet, insbesondere aus dem Grundkörper herausgearbeitet ist. Alternativ ist es möglich, dass die wenigstens eine Schneidkante an einem mit dem Grundkörper verbundenen Schneideinsatz ausgebildet ist.

Der Grundkörper weist vorzugsweise ein Vollhartmetall auf oder besteht aus einem Vollhartmetall. In dem Fall, in welchem die Schneidkante unmittelbar an dem Grundkörper ausgebildet ist, weist der Grundkörper bevorzugt eine auf das Vollhartmetall zumindest bereichsweise aufgebrachte, insbesondere aufgepresste Hartstoffschicht, vorzugsweise aus kubischem Bornitrid (CBN), polykristallinem kubischem Bornitrid (PCBN) oder polykristallinem Diamant (BKD) auf, wobei die wenigstens eine Schneidkante an der Hartstoffschicht ausgebildet, insbesondere aus der Hartstoffschicht herausgearbeitet ist. Ist dagegen die wenigstens eine Schneidkante an einem mit dem Grundkörper verbundenen Schneideinsatz ausgebildet, kann der Grundkörper insbesondere aus Vollhartmetall bestehen, wobei der Schneideinsatz bevorzugt einen Hartstoff aufweist oder aus einem Hartstoff gebildet ist, wobei der Schneideinsatz insbesondere ein Material aufweist oder aus einem Material besteht, das ausgewählt ist aus einer Gruppe bestehend aus kubischem Bornitrid (CBN), polykristallinem kubischem Bornitrid (PCBN), und polykristallinem Diamant (PKD).

Der Schneideinsatz ist bevorzugt insbesondere durch Löten, vorzugsweise durch Hartlöten, mit dem Grundkörper verbunden. Insbesondere ist es möglich, dass der Schneideinsatz in den Grundkörper eingelötet ist.

Es ist grundsätzlich auch möglich, dass der Schneideinsatz in anderer Weise, beispielsweise durch Schraubklemmung, an dem Grundkörper befestigt ist, wodurch er besonders einfach nach Erreichen eines Standzeitendes gegen einen neuen Schneideinsatz ausgetauscht werden kann. Dabei ergeben sich aber aufgrund der im Vergleich zum Löten weniger stabilen Anordnung des Schneideinsatzes und den sich ergebenden Wechselungenauigkeiten geringere Standzeiten. Außerdem können auswechselbare Schneideinsätze zu erhöhten Ungenauigkeiten in der Bearbeitung und letztlich vergrößerten Toleranzabweichungen beim bearbeiteten Werkstück führen. Demgegenüber führen fest verlötete Schneideinsätze zu einer deutlichen Steigerung der Standzeit und vermeiden Ungenauigkeiten beim Wechsel, sodass auch die Bearbeitungsgenauigkeit steigt und die erzielbaren Toleranzen an dem bearbeiteten Werkstück verbessert werden.

Die Aufgabe wird auch gelöst, indem ein Kugelbahnfräser gemäß dem Anspruch 12 geschaffen wird, welcher einen Fräskopf nach einem der zuvor beschriebenen Ausführungsbeispiele aufweist. Dabei verwirklichen sich in Zusammenhang mit dem Kugelbahnfräser insbesondere die Vorteile, die bereits in Zusammenhang mit dem Fräskopf erläutert wurden. Wie ebenfalls bereits erläutert, kann der Fräskopf einstückig mit restlichen Teilen des Kugelbahnfräsers, insbesondere mit einem Kugelbahnfräser-Grundkörper ausgebildet sein. Es ist aber auch möglich, dass der Fräskopf mehrstückig mit dem Kugelbahnfräser-Grundkörper ausgebildet und an diesem mittels einer geeigneten Schnittstelle festlegbar ist. Diese Ausgestaltung hat den Vorteil, dass der Fräskopf am Ende seiner Standzeit in einfacher Weise ausgewechselt werden kann, ohne dass zugleich der Kugelbahnfräser-Grundkörper entsorgt und ausgewechselt werden muss.

Die Aufgabe wird auch gelöst, indem ein Verfahren zum Herstellen einer Schneidkante für einen Kugelbahnfräser gemäß dem Anspruch 13 geschaffen wird, bei welchem die Schneidkante durch Schleifen unmittelbar an einem Grundkörper eines Fräskopfs oder an einem Schneideinsatz für einen Fräskopf hergestellt wird, wobei die Schneidkante als Schnittlinie zwischen einer Spanfläche und einer Freifläche hergestellt wird, wobei die Schneidkante mit einem negativen Spanwinkel ausgebildet wird, dessen Betrag im Bereich eines ersten, bestimmungsgemäß einem arbeitsseitigen Ende des Fräskopfs zugewandten Schneidkantenendes einen anderen Wert aufweist als im Bereich eines zweiten, bestimmungsgemäß einem einspannseitigen Ende des Fräskopfs zugewandten Schneidkantenendes, wobei die Schneidkante mit einem Freiwinkel ausgebildet wird, der im Bereich des ersten Schneidkantenendes einen anderen Wert aufweist als im Bereich des zweiten Schneidkantenendes, und wobei die Schneidkante mit einem Keilwinkel ausgebildet wird, der entlang eines Schneidkantenverlaufs der Schneidkante zwischen dem ersten Schneidkantenende und dem zweiten Schneidkantenende konstant ist. In Zusammenhang mit dem Verfahren verwirklichen sich insbesondere die Vorteile, die bereits in Zusammenhang mit dem Fräskopf einerseits und dem Kugelbahnfräser andererseits erläutert wurden.

Insbesondere wird der Grundkörper oder der Schneideinsatz geschliffen, wobei die Schneidkante durch das Schleifen des Grundkörpers oder des Schneideinsatzes als Schnittlinie zwischen der Spanfläche und der Freifläche hergestellt wird.

Insbesondere wird die Schneidkante durch Schleifen von wenigstens einer Fläche, ausgewählt aus der Spanfläche und der Freifläche, vorzugsweise durch Schleifen der Spanfläche und der Freifläche, als Schnittlinie zwischen der Freifläche und der Spanfläche hergestellt.

Wird die Schneidkante an einem Schneideinsatz für einen Fräskopf hergestellt, geschieht dies bevorzugt gemäß einer ersten Ausführungsform des Verfahrens nach dem Befestigen des Schneideinsatzes an einem Fräskopf, insbesondere nach dem Verlöten oder Einlöten des Schneideinsatzes mit dem Fräskopf oder in den Fräskopf. Der Schneideinsatz ist/wird dabei bevorzugt mit dem Fräskopf hartverlötet. Alternativ ist es gemäß einer anderen Ausführungsform des Verfahrens möglich, dass der Schneideinsatz vor dem Befestigen an dem Fräskopf geschliffen wird, wodurch die Schneidkante hergestellt wird. Es ist allerdings möglich, dass in diesem Fall die Schneidkante nach dem Befestigen des Schneideinsatzes an dem Fräskopf nachbearbeitet wird, insbesondere um die Maßhaltigkeit der Schneidkante zu gewährleisten.

Mittels des Verfahrens, insbesondere durch das Herstellen der Schneidkante unmittelbar an dem Grundkörper des Fräskopfs oder an dem Schneideinsatz, wird bevorzugt ein erfindungsgemäßer Fräskopf oder ein Fräskopf nach einem der zuvor beschriebenen Ausführungsbeispiele erhalten. Gegebenenfalls wird hierzu noch der Schneideinsatz nach dem Schleifen an dem Fräskopf befestigt, insbesondere durch Löten, vorzugsweise durch Hartlöten.

Die Aufgabe wird auch gelöst, indem ein Computerprogrammprodukt gemäß dem Anspruch 15 geschaffen wird, das maschinenlesbare Anweisungen aufweist, aufgrund derer ein erfindungsgemäßes Verfahren oder ein Verfahren nach einer der zuvor beschriebenen Ausführungsformen durchgeführt wird, wenn das Computerprogrammprodukt auf einer zur Ansteuerung einer Schleifmaschine eingerichteten und vorzugsweise mit der Schleifmaschine zu deren Ansteuerung wirkverbundenen Recheneinrichtung läuft. Aufgrund der maschinenlesbaren Anweisungen steuert dann die Recheneinrichtung insbesondere die Schleifmaschine so an, dass die Schneidkante hergestellt wird. In Zusammenhang mit dem Computerprogrammprodukt ergeben sich insbesondere die Vorteile, die bereits in Zusammenhang mit dem Fräskopf und/oder dem Kugelbahnfräser erläutert wurden.

Insbesondere umfasst das Computerprogrammprodukt maschinenlesbare Anweisungen, aufgrund derer mittels der Schleifmaschine ein an oder in der Schleifmaschine angeordneter Grundkörper eines Fräskopfs oder ein Schneideinsatz für einen solchen Fräskopf geschliffen wird, wobei die Schneidkante durch das Schleifen einer Schnittlinie zwischen einer Spanfläche und einer Freifläche hergestellt wird, insbesondere indem zumindest eine Fläche, ausgewählt aus der Freifläche und der Spanfläche, durch die Schleifmaschine geschliffen wird. Vorzugsweise werden die Freifläche und die Spanfläche durch die Schleifmaschine geschliffen.

Die Aufgabe wird auch gelöst, indem ein Datenträger gemäß dem Anspruch 16 geschaffen wird, auf dem ein erfindungsgemäßes Computerprogrammprodukt oder ein Computerprogrammprodukt nach einem der zuvor beschriebenen Ausführungsbeispiele gespeichert ist. Der Datenträger ist vorzugsweise als flüchtiger oder nicht-flüchtiger Datenträger ausgebildet. Der Datenträger kann insbesondere ein Arbeitsspeicher einer Recheneinrichtung, ein Festspeicher, insbesondere eine Festplatte oder Festplatteneinrichtung der Recheneinrichtung, oder ein mobiler Datenträger, beispielsweise ein Bandspeicher, eine Diskette, eine CD-ROM, eine DVD, ein USB-Stick, eine Speicherkarte oder dergleichen sein. Der Datenträger kann auch als Datenwolke, das heißt insbesondere als Netzwerkspeicher aus einer Mehrzahl von Recheneinrichtungen, insbesondere als sogenannte Cloud, ausgebildet sein.

In Zusammenhang mit dem Datenträger verwirklichen sich insbesondere die bereits in Zusammenhang mit dem Fräskopf oder dem Kugelbahnfräser erläuterten Vorteile.

Die Aufgabe wird schließlich auch gelöst, indem eine Schleifmaschine gemäß dem Anspruch 17 geschaffen wird, die eingerichtet ist zur Durchführung eines erfindungsgemäßen Verfahrens oder eines Verfahrens nach einer der zuvor beschriebenen Ausführungsformen. In Zusammenhang mit der Schleifmaschine ergeben sich insbesondere die Vorteile, die bereits in Zusammenhang mit dem Fräskopf oder dem Kugelbahnfräser erläutert wurden.

Die Schleifmaschine weist erfindungsgemäß eine Recheneinrichtung auf, auf der ein erfindungsgemäßes Computerprogrammprodukt oder ein Computerprogrammprodukt nach einem der zuvor beschriebenen Ausführungsbeispiele läuft. Alternativ oder zusätzlich weist die Schleifmaschine bevorzugt einen erfindungsgemäßen Datenträger oder einen Datenträger nach einem der zuvor beschriebenen Ausführungsbeispiele auf.

Das Verfahren ist insbesondere vorgesehen, um einen erfindungsgemäßen Fräskopf oder einen Fräskopf nach einem der zuvor beschriebenen Ausführungsbeispiele herzustellen. Insofern weist das Verfahren bevorzugt wenigstens einen Verfahrensschritt auf, der durch wenigstens ein Merkmal oder eine Kombination von Merkmalen des erfindungsgemäßen Fräskopfs oder eines Fräskopfs nach einem der beschriebenen Ausführungsbeispiele bedingt ist. Insbesondere sind Verfahrensschritte, die explizit oder implizit in Zusammenhang mit dem Fräskopf erläutert wurden, bevorzugt einzeln oder in Kombination miteinander Schritte einer bevorzugten Ausführungsform des Verfahrens.

Die Erfindung wird im Folgenden anhand der Zeichnung näher erläutert. Dabei zeigen:
- Figur 1: eine Detaildarstellung eines Ausführungsbeispiels eines Fräskopfs für einen Kugelbahnfräser;
- Figur 2: eine erste Detail-Querschnittsansicht entlang einer in Figur 1 dargestellten ersten Schnittlinie A-A, und
- Figur 3: eine zweite Detail-Querschnittsansicht entlang einer in Figur 1 dargestellten zweiten Schnittlinie B-B.

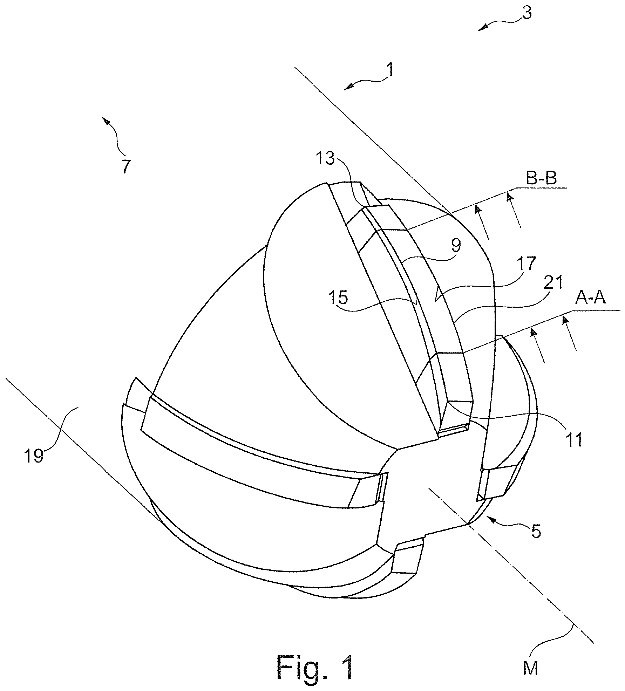

Figur 1 zeigt eine Detaildarstellung eines ersten Ausführungsbeispiels eines Fräskopfs 1 für einen - über den Fräskopf 1 hinaus nicht weiter dargestellten - Kugelbahnfräser 3. Der Fräskopf 1 weist eine gedachte Mittelachse M auf, die einer Drehachse des Fräskopfs 1 und auch des Kugelbahnfräsers 3 bei einer bestimmungsgemäßen Bearbeitung eines nicht dargestellten Werkstücks entspricht. Der Fräskopf 1 und insbesondere auch der Kugelbahnfräser 3 wird/werden also während der Bearbeitung eines Werkstücks bevorzugt um die Mittelachse M rotiert.

Der Fräskopf 1 weist ein erstes, arbeitsseitiges Ende 5 und ein zweites, dem ersten Ende 5 entlang der Mittelachse M gegenüberliegendes, einspannseitiges Ende 7, das hier auf der Detaildarstellung von Figur 1 nicht mehr dargestellt ist, auf, wobei das erste Ende 5 während der Bearbeitung eines Werkstücks bestimmungsgemäß dem Werkstück zugewandt ist, wobei das zweite Ende 7 einem Einspannabschnitt des Kugelbahnfräsers 3 zugewandt ist oder einen Einspannabschnitt des Fräskopfs 1 aufweist.

Der Fräskopf 1 weist außerdem wenigstens eine geometrisch definierte Schneidkante, hier insgesamt vier geometrisch definierte Schneidkanten auf, von denen der besseren Übersichtlichkeit wegen nur eine mit dem Bezugszeichen 9 bezeichnet ist.

Alles was im Folgenden für die hier explizit bezeichnete geometrisch definierte Schneidkante 9 erläutert wird, trifft genau so auch auf die der besseren Übersichtlichkeit wegen nicht eigens bezeichneten, übrigen drei geometrisch definierten Schneidkanten des Fräskopfs 1 zu. Die vier geometrisch definierten Schneidkanten 9 sind also alle identisch ausgebildet. Der Einfachheit wegen wird daher im Folgenden nur eine geometrisch definierte Schneidkante 9 im Detail beschrieben.

Die geometrisch definierte Schneidkante 9 erstreckt sich ausgehend von einem dem ersten Ende 5 zugewandten, ersten Schneidkantenende 11 in Richtung des zweiten Endes 7 bis zu einem zweiten Schneidkantenende 13 entlang eines Schneidkantenverlaufs, wobei der Begriff "Schneidkantenverlauf" den Verlauf der geometrisch definierten Schneidkante 9 ausgehend von dem ersten Schneidkantenende 11 bis zu dem zweiten Schneidkantenende 13 bezeichnet.

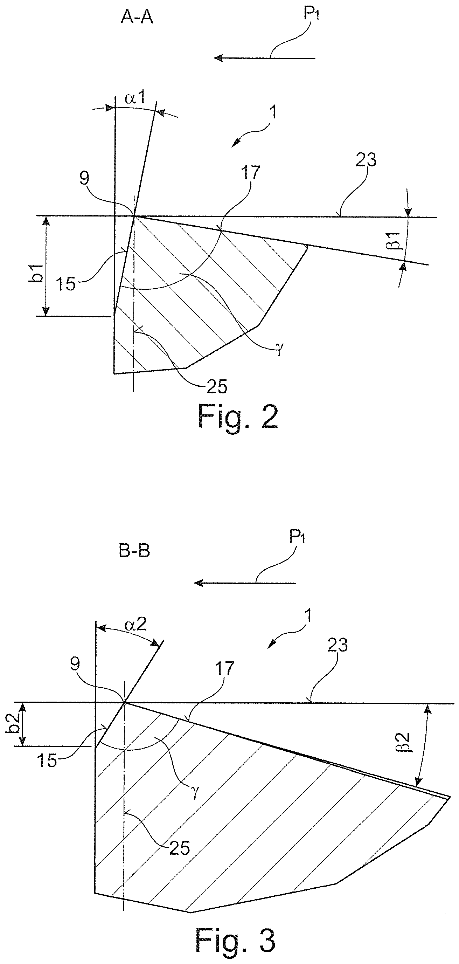

Die Schneidkante 9 ist gebildet als Schnittlinie zwischen einer Spanfläche 15 und einer ersten Freifläche 17, welche der Schneidkante 9 jeweils zugeordnet sind. Dabei weist die Spanfläche 15 einen negativen Spanwinkel auf. Neben dem negativen Spanwinkel sind der Schneidkante 9 ein erster Freiwinkel und ein Keilwinkel zugeordnet, die in Zusammenhang mit den Figuren 2 und 3 näher erläutert werden.

Bei dem Fräskopf 1 ist insbesondere vorgesehen, dass ein Betrag des negativen Spanwinkels im Bereich des ersten Schneidkantenendes 11 einen anderen Wert aufweist als im Bereich des zweiten Schneidkantenendes 13, wobei der erste Freiwinkel im Bereich des ersten Schneidkantenendes 11 einen anderen Wert aufweist als im Bereich des zweiten Schneidkantenendes 13. Der Keilwinkel ist entlang des Schneidkantenverlaufs von dem ersten Schneidkantenende 11 bis zu dem zweiten Schneidkantenende 13 konstant.

Insbesondere weist die Schneidkante 9 entlang des Schneidkantenverlaufs keine zwei voneinander verschiedenen Punkte auf, an welchen die Beträge für den negativen Spanwinkel und/oder den ersten Freiwinkel gleich wären. Besonders bevorzugt variieren der Betrag des Spanwinkels und/oder des ersten Freiwinkels kontinuierlich, insbesondere linear entlang des Schneidkantenverlaufs der Schneidkante 9.

Der Betrag des negativen Spanwinkels ist im Bereich des ersten Schneidkantenendes 11, insbesondere an dem ersten Schneidkantenende 11, bevorzugt kleiner als im Bereich des zweiten Schneidkantenendes 13, insbesondere an dem ersten Schneidkantenende 13. Alternativ oder zusätzlich ist der erste Freiwinkel im Bereich des ersten Schneidkantenendes 11, insbesondere an dem ersten Schneidkantenende 11, bevorzugt kleiner als im Bereich des zweiten Schneidkantenendes 13, insbesondere an dem zweiten Schneidkantenende 13.

Der Betrag des negativen Spanwinkels nimmt entlang des Schneidkantenverlaufs von dem ersten Schneidkantenende 11 hin zu dem zweiten Schneidkantenende 13 insbesondere in dem Maß zu, in welchem auch der erste Freiwinkel zunimmt. Der Betrag des negativen Spanwinkels und der erste Freiwinkel nehmen also insbesondere in gleichem Verhältnis zu.

Anhand von Figur 1 wird auch bereits deutlich, dass die Breite der Spanfläche 15 im Bereich des ersten Schneidkantenendes 11, insbesondere an dem ersten Schneidkantenende 11, größer ist als im Bereich des zweiten Schneidkantenendes 13, insbesondere an dem zweiten Schneidkantenende 13. Auch die Breite der Spanfläche 15 variiert dabei bevorzugt entlang des Schneidkantenverlaufs kontinuierlich, insbesondere nimmt sie von dem ersten Schneidkantenende 11 zu dem zweiten Schneidkantenende 13 linear ab. Die Spanfläche 15 kann insoweit auch als nachgeführte Negativfase bezeichnet werden.

Bevorzugt beträgt die Breite der Spanfläche 15 im Bereich des zweiten Schneidkantenendes 13 mindestens 0,1 mm, vorzugsweise mindestens 0,15 mm, wobei die Breite der Spanfläche 15 im Bereich des ersten Schneidkantenendes 11 höchstens 0,4 mm, vorzugsweise höchstens 0,3 mm beträgt.

Anhand von Figur 1 wird auch deutlich, dass die Spanfläche 15 ausgehend von dem ersten Schneidkantenende 11 bis hin zu dem zweiten Schneidkantenende 13 quasi einen verdrillten Verlauf nimmt, wobei ein gedachter Normalenvektor der Spanfläche 15 im Verlauf von dem ersten Schneidkantenende 11 bis hin zu dem zweiten Schneidkantenende 13 nach außen in Richtung einer äußeren Umgebung des Fräskopfs 1 verdreht wird.

Es ist möglich, dass die Schneidkante 9 - insbesondere in einer Projektion auf eine die Mittelachse M umgreifende, zylindrische Umfangsfläche - einen geraden, gekrümmten und/oder spiraligen Verlauf aufweist. Sie kann insbesondere parallel zu der gedachten Mittelachse ausgerichtet sein oder einen endlichen Winkel mit dieser einschließen.

Bei dem hier dargestellten Ausführungsbeispiel weist der Fräskopf 1 einen Grundkörper 19 auf, der vorzugsweise Vollhartmetall umfasst oder aus Vollhartmetall besteht. Dabei ist die Schneidkante 9 hier an einem mit dem Grundkörper 19 verbundenen, insbesondere an den Grundkörper 19 - vorzugsweise durch Hartlöten - angelöteten Schneideinsatz 21 ausgebildet. Insbesondere ist für jede der vier Schneidkanten 9 ein eigener Schneideinsatz 21 vorgesehen. Dies gilt bevorzugt unabhängig davon, wie viele Schneidkanten 9 der Fräskopf 1 tatsächlich aufweist. Es ist also bevorzugt stets jeder Schneidkante 9 ein eigener Schneideinsatz 21 zugeordnet.

Der Schneideinsatz 21 weist vorzugsweise ein Material auf oder besteht aus einem Material, das ausgewählt ist aus einer Gruppe bestehend aus kubischem Bornitrid (CBN), polykristallinem kubischen Bornitrid (PCBN), und polykristallinem Diamant (PKD).

Alternativ ist es auch möglich, dass die Schneidkante 9 unmittelbar an dem Grundkörper 19 ausgebildet, insbesondere aus diesem herausgearbeitet ist. In dem Fall weist der Grundkörper 19 bevorzugt einen Vollhartmetallkörper und eine auf den Vollhartmetallkörper aufgepresste Hartstoffschicht auf, aus welcher die Schneidkante 9 herausgearbeitet ist. Diese Hartstoffschicht weist bevorzugt ein Material auf oder besteht aus einem Material, das ausgewählt ist aus einer Gruppe bestehend aus kubischem Bornitrid (CBN), polykristallinem kubischem Bornitrid (PCBN) und polykristallinem Diamant (PKD).

Figur 2 zeigt eine Detail-Querschnittsansicht gemäß einer in Figur 1 dargestellten ersten Schnittlinie A-A. Die in Figur 2 dargestellte, erste Querschnittsebene ist näher an dem ersten Schneidkantenende 11 angeordnet, als eine in Figur 3 dargestellte, zweite Querschnittsebene, die in Figur 1 durch eine zweite Schnittlinie B-B angezeigt ist, wobei die Detail-Querschnittsansicht gemäß Figur 3 näher an dem zweiten Schneidkantenende 13 angeordnet ist.

Gleiche und funktionsgleiche Elemente sind in allen Figuren mit gleichen Bezugszeichen versehen, sodass insoweit jeweils auf die vorangegangene Beschreibung verwiesen wird.

In Figur 2 sind insbesondere eine gedachte Werkstückebene 23, die auch als Tangentialebene an das bearbeitete Werkstück ausgestaltet sein kann, sowie eine gedachte Ebene 25 dargestellt, wobei die gedachte Ebene 25 senkrecht auf der gedachten Werkstückebene 23 steht, und wobei die gedachte Werkstückebene 23 und die gedachte Ebene 25 sich in der Schneidkante 9 schneiden. Die Schneidkante 9 berührt dabei während der Bearbeitung eines Werkstücks dieses insbesondere in einem Berührungspunkt, der sowohl in der gedachten Werkstückebene 23 als auch in der gedachten Ebene 25 liegt, wobei die gedachte Werkstückebene 23 insbesondere als Tangentialebene an das Werkstück in dem Berührungspunkt ausgestaltet ist.

Der Spanwinkel 15 ergibt sich als Winkel, den die Spanfläche 15 mit der gedachten Ebene 25 einschließt, wobei hier der einfacheren Darstellung wegen ein numerisch mit dem Spanwinkel identischer Winkel α dargestellt ist, wobei sich die Identität zwischen dem dargestellten Winkel α und dem Spanwinkel aus einfachen geometrischen Erwägungen ergibt. Im Folgenden wird daher der Einfachheit wegen auch der Spanwinkel als Spanwinkel α bezeichnet.

Mit einem Pfeil P1 ist hier eine Bearbeitungsrichtung des Fräskopfs 1 dargestellt, entlang derer die Schneidkante 9 relativ zu einem Werkstück verlagert wird. Es wird deutlich, dass die Spanfläche 15 der gedachten Ebene 25 und auch der Schneidkante 9 in Bearbeitungsrichtung voreilt. Daher wird dem Spanwinkel α ein negatives Vorzeichen zugeordnet.

Der erste Freiwinkel β ist derjenige Winkel, welchen die Freifläche 17 mit der gedachten Werkstückebene 23 einschließt.

Schließlich ist der Keilwinkel γ derjenige Winkel, den die Spanfläche 15 mit der Freifläche 17 einschließt.

Dabei gilt die Gleichung, dass sich der Spanwinkel α - unter Berücksichtigung seines Vorzeichens -, der Keilwinkel γ und der erste Freiwinkel β zu 90° addieren, wobei sich die Gradangabe auf einen Vollkreis von 360° bezieht.

Beispielsweise ist hier die Summe aus dem Keilwinkel γ und dem ersten Freiwinkel β gerade um den Betrag des negativen Spanwinkels α größer als 90°, sodass sich genau 90° ergeben, wenn der Betrag des Spanwinkels - aufgrund des negativen Vorzeichens, welches dem Spanwinkel zugeordnet ist - von der Summe aus dem Keilwinkel γ und dem ersten Freiwinkel β abgezogen wird.

In Figur 2 ist auch eine Breite b der Spanfläche 15 eingezeichnet.

Figur 3 zeigt - wie bereits erwähnt - eine zweite Detail-Querschnittsansicht entlang der in Figur 1 dargestellten zweiten Schnittlinie B-B.

Ein Vergleich der Figuren 2 und 3 zeigt, dass sowohl der Betrag des negativen Spanwinkels α als auch der Betrag des ersten Freiwinkels β im Bereich des ersten Schneidkantenendes 11 kleiner sind als im Bereich des zweiten Schneidkantenendes 13. Dabei weisen sie insbesondere in der Schnittebene gemäß Figur 2 erste Werte α1, β1 auf, die kleiner sind als die zweiten Werte α2, β2 gemäß der Schnittebene von Figur 3. Dabei ist die Veränderung des Spanwinkels α einerseits und des Freiwinkels β andererseits jedoch derart, dass der Keilwinkel γ konstant ist.

Insgesamt zeigt ein Vergleich der Figuren 2 und 3 auch, dass die Schneidgeometrie von dem ersten Schneidkantenende 11 zu dem zweiten Schneidkantenende 13 hin quasi verdreht wird, hier in Richtung des Uhrzeigersinns.

Zugleich ergibt sich bei vorgegebenem Schneidkantenverlauf der Schneidkante 9, dass die Breite b der Spanfläche 15 von dem ersten Schneidkantenende 11 bis zu dem zweiten Schneidkantenende 13 hin abnimmt. Insoweit weist die Spanfläche 15 in Figur 2 eine erste, größere Breite b1 und in Figur 3 eine zweite, kleinere Breite b2 auf.

Bevorzugt beträgt der Betrag des hier beschriebenen negativen Spanwinkels α im Bereich des ersten Schneidkantenendes 11, insbesondere an dem ersten Schneidkantenende 11, von wenigstens 10° bis höchstens 19°, vorzugsweise von wenigstens 12° bis höchstens 17°, vorzugsweise von wenigstens 14° bis höchstens 16°, vorzugsweise 15°. Er beträgt im Bereich des zweiten Schneidkantenendes 13, insbesondere an dem zweiten Schneidkantenende 13 bevorzugt von mindestens 20° bis höchstens 30°, vorzugsweise von mindestens 22° bis höchstens 28°, vorzugsweise von mindestens 24° bis höchstens 26°, vorzugsweise 25°.

Der erste Freiwinkel β beträgt im Bereich des ersten Schneidkantenendes 11, insbesondere an dem ersten Schneidkantenende 11, bevorzugt von mindestens 5° bis höchstens 10°, vorzugsweise von mindestens 6° bis höchstens 8°, vorzugsweise 7°. Er beträgt im Bereich des zweiten Schneidkantenendes 13, insbesondere an dem zweiten Schneidkantenende 13, bevorzugt von mindestens 15° bis höchstens 20°, vorzugsweise von mindestens 16° bis höchstens 18°, vorzugsweise 17°.

In nicht dargestellter Weise schließt sich bevorzugt an die erste Freifläche 17 eine zweite Freifläche umfangsseitig an, der ein zweiter Freiwinkel zugeordnet ist. Dieser ist vorzugsweise überall entlang des Schneidkantenverlaufs der Schneidkante 9 größer als der erste Freiwinkel β und besonders bevorzugt entlang des Schneidkantenverlaufs konstant. Er weist vorzugsweise einen Wert von mindestens 16° bis höchstens 21°, vorzugsweise von mindestens 17° bis höchstens 19°, vorzugsweise von 18° auf.

Die hier dargestellte Schneidgeometrie des Fräskopfs 1 erweist sich als besonders stabil, wobei insbesondere ein vereinheitlichter Verschleiß über den Verlauf der Schneidkante 9 geschaffen wird, sodass die Standzeit des Fräskopfs 1 erhöht ist. Zusätzlich werden Schwingungen bei der Bearbeitung eines Werkstücks reduziert, was sich außerdem vorteilhaft auf die Standzeit des Fräskopfs 1 auswirkt.

Die Schneidkante 9 wird bevorzugt durch unmittelbares Schleifen des Grundkörpers 19 oder des Schneideinsatzes 21 hergestellt, insbesondere indem zumindest eine Fläche, ausgewählt aus der Spanfläche 15 und der ersten Freifläche 17, geschliffen wird. Vorzugsweise werden sowohl die Spanfläche 15 als auch die erste Freifläche 17 geschliffen, um die Schneidkante 9 als Schnittlinie zwischen der Spanfläche 15 und der ersten Freifläche 17 herzustellen.

Wird der Schneideinsatz 21 geschliffen, erfolgt dies bevorzugt in bereits an dem Grundkörper 19 befestigtem Zustand des Schneideinsatzes 21. Alternativ kann der Schneideinsatz auch vor dem Befestigen an dem Grundkörper 19 geschliffen werden.

Durch Herstellen der Schneidkante 9 wird bevorzugt der Fräskopf 1 erhalten. Gegebenenfalls bedarf es zusätzlich nur noch eines Befestigens, insbesondere eines Anlötens, des Schneideinsatzes 21 an dem Grundkörper 19, wenn der Schneideinsatz 21 vor dem Befestigen an den Grundkörper 19 geschliffen wird.

Das Schleifen erfolgt bevorzugt mit einer automatisierten, insbesondere programmierbaren Schleifmaschine. Dabei ist zur Ansteuerung der Schleifmaschine insbesondere ein Computerprogrammprodukt vorgesehen, das maschinenlesbare Anweisungen aufweist, aufgrund derer ein zuvor beschriebenes Verfahren zum Herstellen der Schneidkante 9 auf der Schleifmaschine durchgeführt wird, wenn das Computerprogrammprodukt auf einer zur Ansteuerung der Schleifmaschine eingerichteten Recheneinrichtung läuft.

## Patentansprüche

1. Fräskopf (1) für einen Kugelbahnfräser (3), mit
- einer gedachten Mittelachse (M),
- einem ersten, arbeitsseitigen Ende (5) und einem zweiten, dem ersten Ende (5) entlang der Mittelachse (M) gesehen gegenüberliegenden, einspannseitigen Ende (7), und mit
- wenigstens einer geometrisch definierten Schneidkante (9), die sich ausgehend von einem dem ersten Ende (5) des Fräskopfs (1) zugewandten, ersten Schneidkantenende (11) in Richtung des zweiten Endes (7) des Fräskopfs (1) bis zu einem zweiten, dem zweiten Ende (7) des Fräskopfs (1) zugewandten Schneidkantenende (13) entlang eines Schneidkantenverlaufs der Schneidkante (9) erstreckt, wobei
- die wenigstens eine Schneidkante (9) als Schnittlinie zwischen einer der wenigstens einen Schneidkante (9) zugeordneten Spanfläche (15) und einer der wenigstens einen Schneidkante (9) zugeordneten, ersten Freifläche (17) ausgebildet ist, wobei
- der wenigstens einen Schneidkante (9) ein negativer Spanwinkel (α), ein erster Freiwinkel (β) und ein Keilwinkel (γ) zugeordnet sind, wobei
- ein Betrag des negativen Spanwinkels (α) im Bereich des ersten Schneidkantenendes (11) einen anderen Wert aufweist als im Bereich des zweiten Schneidkantenendes (13), und wobei
- der erste Freiwinkel (β) im Bereich des ersten Schneidkantenendes (11) einen anderen Wert aufweist als im Bereich des zweiten Schneidkantenendes (13),
**dadurch gekennzeichnet, dass**
- der Keilwinkel (γ) entlang des Schneidkantenverlaufs konstant ist, und dass
- eine Breite der Spanfläche (15) im Bereich des ersten Schneidkantenendes (11) größer ist als im Bereich des zweiten Schneidkantenendes (13).

2. Fräskopf (1) nach Anspruch 1, **dadurch gekennzeichnet, dass** entlang des Schneidkantenverlaufs keine zwei voneinander verschiedenen Punkte auf der Schneidkante (9) existieren, an denen die Schneidkante (9) identische Beträge für den negativen Spanwinkel (α) und/oder identische erste Freiwinkel (β) aufweist.

3. Fräskopf (1) nach einem der vorhergehenden Ansprüche, **dadurch gekennzeichnet, dass** der Betrag des negativen Spanwinkels (α) und/oder der erste Freiwinkel (β) kontinuierlich, vorzugsweise linear, entlang des Schneidkantenverlaufs der wenigstens einen Schneidkante (9) variieren.

4. Fräskopf (1) nach einem der vorhergehenden Ansprüche, **dadurch gekennzeichnet, dass** der Betrag des negativen Spanwinkels (α) im Bereich des ersten Schneidkantenendes (11) kleiner ist als im Bereich des zweiten Schneidkantenendes (13), und/oder dass der erste Freiwinkel (β) im Bereich des ersten Schneidkantenendes (11) kleiner ist als im Bereich des zweiten Schneidkantenendes (13).

5. Fräskopf (1) nach einem der vorhergehenden Ansprüche, **dadurch gekennzeichnet, dass** der Betrag des negativen Spanwinkels (α) entlang des Schneidkantenverlaufs der wenigstens einen Schneidkante (9) in dem Maß zunimmt, in welchem auch der erste Freiwinkel (β) zunimmt.

6. Fräskopf (1) nach einem der vorhergehenden Ansprüche, **dadurch gekennzeichnet, dass** die Breite der Spanfläche (15) im Bereich des ersten Schneidkantenendes (11) höchstens 0,4 mm, vorzugsweise höchstens 0,3 mm beträgt, und/oder dass die Breite der Spanfläche (15) im Bereich des zweiten Schneidkantenendes (13) mindestens 0,1 mm, vorzugsweise mindestens 0,15 mm beträgt.

7. Fräskopf (1) nach einem der vorhergehenden Ansprüche, **dadurch gekennzeichnet, dass** der Schneidkantenverlauf der wenigstens einen Schneidkante (9) gerade, gekrümmt und/oder spiralig ausgebildet ist, wobei er insbesondere parallel zu der gedachten Mittelachse (M) verläuft oder einen endlichen Winkel mit der gedachten Mittelachse (M) einschließt.

8. Fräskopf (1) nach einem der vorhergehenden Ansprüche, **dadurch gekennzeichnet, dass**
a) der Betrag des negativen Spanwinkels (α) im Bereich des ersten Schneidkantenendes (11) von mindestens 10° bis höchstens 19°, vorzugsweise von mindestens 12° bis höchstens 17°, vorzugsweise von mindestens 14° bis höchstens 16°, vorzugsweise 15°, und/oder im Bereich des zweiten Schneidkantenendes (13) von mindestens 20° bis höchstens 30°, vorzugsweise von mindestens 22° bis höchstens 28°, vorzugsweise von mindestens 24° bis höchstens 26°, vorzugsweise 25° beträgt; und/oder dass
b) der erste Freiwinkel (β) im Bereich des ersten Schneidkantenendes (11) von mindestens 5° bis höchstens 10°, vorzugsweise von mindestens 6° bis höchstens 8°, vorzugsweise 7°, und/oder im Bereich des zweiten Schneidkantenendes (13) von mindestens 15° bis höchstens 20°, vorzugsweise von mindestens 16° bis höchstens 18°, vorzugsweise 17° beträgt.

9. Fräskopf (1) nach einem der vorhergehenden Ansprüche, **dadurch gekennzeichnet, dass** sich an die erste Freifläche (17) umfangsseitig eine zweite Freifläche anschließt, der ein zweiter Freiwinkel zugeordnet ist, der vorzugsweise überall entlang des Schneidkantenverlaufs größer ist als der erste Freiwinkel (β).

10. Fräskopf (1) nach Anspruch 9, **dadurch gekennzeichnet, dass** der zweite Freiwinkel entlang des Schneidkantenverlaufs konstant ist und vorzugsweise von mindestens 16° bis höchstens 21°, vorzugsweise von mindestens 17° bis höchstens 19°, vorzugsweise 18° beträgt.

11. Fräskopf (1) nach einem der vorhergehenden Ansprüche, **dadurch gekennzeichnet, dass** der Fräskopf (1) einen Grundkörper (19) aufweist, wobei die wenigstens eine Schneidkante (9)
a) unmittelbar an dem Grundkörper (19), oder
b) an einem mit dem Grundkörper (19) verbundenen, vorzugsweise an den Grundkörper (19) angelöteten Schneideinsatz (21)
ausgebildet ist.

12. Kugelbahnfräser (3), mit einem Fräskopf (1) nach einem der Ansprüche 1 bis 11.

13. Verfahren zum Herstellen einer Schneidkante (9) für einen Kugelbahnfräser (3), wobei
- die Schneidkante (9) durch Schleifen unmittelbar an einem Grundkörper (19) eines Fräskopfs (1) oder an einem Schneideinsatz (21) für einen Fräskopf (1) hergestellt wird, wobei
- die Schneidkante (9) als Schnittlinie zwischen einer Spanfläche (15) und einer Freifläche (17) hergestellt wird, wobei
- die Schneidkante (9) mit einem negativen Spanwinkel (α) ausgebildet wird, dessen Betrag im Bereich eines ersten, einem arbeitsseitigen Ende (5) des Fräskopfs (1) zugewandten Schneidkantenendes (11) einen anderen Wert aufweist als im Bereich eines zweiten, einem einspannseitigen Ende (7) des Fräskopfs (1) zugewandten Schneidkantenendes (13), wobei
- die Schneidkante (9) mit einem Freiwinkel (β) hergestellt wird, der im Bereich des ersten Schneidkantenendes (11) einen anderen Wert aufweist als im Bereich des zweiten Schneidkantenendes (13), wobei
- die Schneidkante (9) mit einem Keilwinkel (γ) hergestellt wird, der entlang eines Schneidkantenverlaufs der Schneidkante (9) zwischen dem ersten Schneidkantenende (11) und dem zweiten Schneidkantenende (13) konstant ist, und wobei
- die Spanfläche (15) derart hergestellt wird, dass eine Breite der Spanfläche (15) im Bereich des ersten Schneidkantenendes (11) größer ist als im Bereich des zweiten Schneidkantenendes (13).

14. Verfahren nach Anspruch 13, **dadurch gekennzeichnet, dass** durch Herstellen der Schneidkante (9) ein Fräskopf (1) nach einem der Ansprüche 1 bis 11 erhalten wird.

15. Computerprogrammprodukt, umfassend maschinenlesbare Anweisungen, aufgrund derer ein Verfahren nach einem der Ansprüche 13 oder 14 durchgeführt wird, wenn das Computerprogrammprodukt auf einer zur Ansteuerung einer Schleifmaschine eingerichteten Recheneinrichtung läuft.

16. Datenträger, mit einem Computerprogrammprodukt nach Anspruch 15, das auf dem Datenträger gespeichert ist.

17. Schleifmaschine zum Herstellen einer Schneidkante (9) für einen Kugelbahnfräser (3), wobei die Schneidkante (9) durch Schleifen unmittelbar an einem Grundkörper (19) eines Fräskopfs (1) oder an einem Schneideinsatz (21) für einen Fräskopf (1) hergestellt ist, wobei die Schleifmaschine eingerichtet ist zur Durchführung eines Verfahrens nach einem der Ansprüche 13 oder 14, mit einer Recheneinrichtung, auf der ein Computerprogrammprodukt nach Anspruch 15 läuft.

## Claims

1. Milling head (1) for a ball track milling cutter (3), comprising
- an imaginary centre axis (M),
- a first, working-side end (5) and a second, clamping-side end (7) opposite the first end (5) when viewed along the centre axis (M), and comprising
- at least one geometrically defined cutting edge (9) extending along a cutting edge profile of the cutting edge (9) from a first cutting edge end (11) facing the first end (5) of the milling head (1) in the direction of the second end (7) of the milling head (1) to a second cutting edge end (13) facing the second end (7) of the milling head (1), wherein
- the at least one cutting edge (9) is designed as an intersecting line between a rake face (15) associated with the at least one cutting edge (9) and a first flank face (17) associated with the at least one cutting edge (9), wherein
- a negative rake angle (α), a first clearance angle (β), and a wedge angle (γ) are assigned to the at least one cutting edge (9), wherein
- an absolute value of the negative rake angle (α) has a different value in the region of the first cutting edge end (11) than in the region of the second cutting edge end (13), und wherein
- the first clearance angle (β) has a different value in the region of the first cutting edge end (11) than in the region of the second cutting edge end (13),
**characterised in that**
- the wedge angle (γ) is constant along the cutting edge profile, and **in that**
- a width of the rake face (15) is greater in the region of the first cutting edge end (11) than in the region of the second cutting edge end (13).

2. Milling head (1) according to claim 1, **characterised in that** along the cutting edge profile, there are no two distinct points on the cutting edge (9) where the cutting edge (9) has identical absolute values for the negative rake angle (α) and/or identical first clearance angles (β).

3. Milling head (1) according to one of the preceding claims, **characterised in that** the absolute value of the negative rake angle (α) and/or the first clearance angle (β) vary continuously, preferably linearly, along the cutting edge profile of the at least one cutting edge (9).

4. Milling head (1) according to one of the preceding claims, **characterised in that** the absolute value of the negative rake angle (α) is smaller in the region of the first cutting edge end (11) than in the region of the second cutting edge end (13), and/or the first clearance angle (β) is smaller in the region of the first cutting edge end (11) than in the region of the second cutting edge end (13).

5. Milling head (1) according to one of the preceding claims, **characterised in that** the absolute value of the negative rake angle (α) increases along the cutting edge profile of the at least one cutting edge (9) to the extent to which the first clearance angle (β) increases also.

6. Milling head (1) according to one of the preceding claims, **characterised in that** the width of the rake face (15) in the region of the first cutting edge end (11) is at most 0.4 mm, preferably at most 0.3 mm, and/or that the width of the rake face (15) in the region of the second cutting edge end (13) is at least 0.1 mm, preferably at least 0.15 mm.

7. Milling head (1) according to one of the preceding claims, **characterised in that** the cutting edge profile of the at least one cutting edge (9) is formed straight, curved, and/or spiral, wherein said cutting edge profile extends in particular parallel to the imaginary centre axis (M) or comprises a finite angle with the imaginary centre axis (M).

8. Milling head (1) according to one of the preceding claims, **characterised in that**
a) the absolute value of the negative rake angle (α) is in the region of the first cutting edge end (11) from at least 10° to at most 19°, preferably from at least 12° to at most 17°, preferably from at least 14° to at most 16°, preferably 15°, and/or is in the region of the second cutting edge end (13) from at least 20° to at most 30°, preferably from at least 22° to at most 28°, preferably from at least 24° to at most 26°, preferably 25°; and/or that
b) the first clearance angle (β) is in the region of the first cutting edge end (11) from at least 5° to at most 10°, preferably at least 6° to at most 8°, preferably 7°, and/or is in the region of the second cutting edge end (13) from at least 15° to at most 20°, preferably from at least 16° to at most 18°, preferably 17°.

9. Milling head (1) according to one of the preceding claims, **characterised in that** a second flank face adjoins the first flank face (17) on the circumference, to which a second clearance angle is assigned, which is preferably greater than the first clearance angle (β) everywhere along the cutting edge profile.

10. Milling head (1) according to claim 9, **characterised in that** the second clearance angle is constant along the cutting edge profile and is preferably from at least 16° to at most 21°, preferably from at least 17° to at most 19°, preferably 18°.

11. Milling head (1) according to one of the preceding claims, **characterised in that** the milling head (1) comprises a main body (19), wherein the at least one cutting edge (9) is formed
a) directly on the main body (19), or
b) on a cutting insert (21) connected to the main body (19), preferably soldered to the main body (19).

12. Ball track milling cutter (3), comprising a milling head (1) according to one of claims 1 to 11.

13. Method for producing a cutting edge (9) for a ball track milling cutter (3), wherein
- the cutting edge (9) is produced by grinding directly on a main body (19) of a milling head (1) or on a cutting insert (21) for a milling head (1), wherein
- the cutting edge (9) is produced as an intersecting line between a rake face (15) and a flank face (17), wherein
- the cutting edge (9) is formed with a negative rake angle (α) whose absolute value has a different value in the region of a first cutting edge end (11) facing a working-side end (5) of the milling head (1) than in the region of a second cutting edge end (13) facing a clamping-side end (7) of the milling head (1), wherein
- the cutting edge (9) is produced with a clearance angle (β) that has a different value in the region of the first cutting edge end (11) than in the region of the second cutting edge end (13), and wherein
- the cutting edge (9) is produced with a wedge angle (γ) that is constant along a cutting edge profile of the cutting edge (9) between the first cutting edge end (11) and the second cutting edge end (13), and wherein
- the rake face (15) is produced such that a width of the rake face (15) is greater in the region of the first cutting edge end (11) than in the region of the second cutting edge end (13).

14. Method according to claim 13, **characterised in that** a milling head (1) according to one of claims 1 to 11 is obtained by manufacturing the cutting edge (9).

15. Computer program product comprising machine-readable instructions, on the basis of which a method according to one of claims 13 or 14 is carried out when the computer program product runs on a computer set up to control a grinding machine.

16. Data carrier comprising a computer program product according to claim 15, which is stored on the data carrier.

17. Grinding machine for producing a cutting edge (9) for a ball track milling cutter (3), wherein the cutting edge (9) is produced by grinding directly on a main body (19) of a milling head (1) or on a cutting insert (21) for a milling head (1), wherein the grinding machine is adapted for carrying out a method according to one of claims 13 or 14, comprising a computing device on which runs a computer program product according to claim 15.

## Revendications

1. Tête de fraisage (1) pour une fraise à billes (3), avec
un axe central imaginaire (M),
une première extrémité (5) située côté travail et une seconde extrémité (7) située côté serrage, opposée à la première extrémité (5) lorsqu'on la considère le long de l'axe médian (M), et avec
au moins une arête de coupe (9) géométriquement définie qui s'étend depuis une première extrémité d'arête de coupe (11), tournée vers la première extrémité (5) de la tête de fraisage (1), en direction de la seconde extrémité (7) de la tête de fraisage (1) jusqu'à une seconde extrémité d'arête de coupe (13), tournée vers la seconde extrémité (7) de la tête de fraisage (1), le long d'un tracé d'arête de coupe de l'arête de coupe (9), dans laquelle
la au moins une arête de coupe (9) est réalisée sous la forme d'une ligne de coupe entre une surface d'enlèvement de copeau (15) associée à la au moins une arête de coupe (9) et une première surface de dépouille (17) associée à la au moins une arête de coupe (9), dans laquelle
un angle d'enlèvement de copeau (a) négatif, un premier angle de dépouille (β) et un angle de coin (γ) sont associés à la au moins une arête de coupe (9), dans laquelle
une valeur de l'angle d'enlèvement de copeau (a) négatif dans la région de la première extrémité d'arête de coupe (11) présente une valeur différente de celle qu'elle présente dans la région de la seconde extrémité d'arête de coupe (13), et dans laquelle
le premier angle de dépouille (β) dans la région de la première extrémité d'arête de coupe (11) présente une valeur différente de celle qu'il présente dans la région de la seconde extrémité d'arête de coupe (13),
**caractérisée en ce que**
l'angle de coin (γ) le long du tracé d'arête de coupe est constant, et
une largeur de la surface d'enlèvement de copeau (15) dans la région de la première extrémité d'arête de coupe (11) est supérieure à ce qu'elle est dans la région de la seconde extrémité d'arête de coupe (13).

2. Tête de fraisage (1) selon la revendication 1, **caractérisée en ce qu'il** n'existe pas, le long du tracé d'arête de coupe, deux points différents l'un de l'autre sur l'arête de coupe (9) au niveau desquels l'arête de coupe (9) présente des valeurs identiques pour l'angle d'enlèvement de copeau (α) négatif et/ou des premiers angles de dépouille (β) identiques.

3. Tête de fraisage (1) selon l'une quelconque des revendications précédentes,
**caractérisée en ce que** la valeur de l'angle d'enlèvement de copeau (α) négatif et/ou le premier angle de dépouille (β) varient de manière continue, de manière préférée de manière linéaire, le long du tracé d'arête de coupe de la au moins une arête de coupe (9).

4. Tête de fraisage (1) selon l'une quelconque des revendications précédentes,
**caractérisée en ce que** la valeur de l'angle d'enlèvement de copeau (α) négatif dans la région de la première extrémité d'arête de coupe (11) est inférieure à ce qu'elle est dans la région de la seconde extrémité d'arête de coupe (13), et/ou **en ce que** le premier angle de dépouille (β) dans la région de la première extrémité d'arête de coupe (11) est inférieur à ce qu'il est dans la région de la seconde extrémité d'arête de coupe (13).

5. Tête de fraisage (1) selon l'une quelconque des revendications précédentes,
**caractérisée en ce que** la valeur de l'angle d'enlèvement de copeau (α) négatif le long du tracé d'arête de coupe de la au moins une arête de coupe (9) augmente dans la mesure où le premier angle de dépouille (β) augmente également.

6. Tête de fraisage (1) selon l'une quelconque des revendications précédentes,
**caractérisée en ce que** la largeur de la surface d'enlèvement de copeau (15) dans la région de la première extrémité d'arête de coupe (11) est d'au plus 0,4 mm, de manière préférée d'au plus 0,3 mm, et/ou **en ce que** la largeur de la surface d'enlèvement de copeau (15) dans la région de la seconde extrémité d'arête de coupe (13) est d'au moins 0,1 mm, de manière préférée d'au moins 0,15 mm.

7. Tête de fraisage (1) selon l'une quelconque des revendications précédentes,
**caractérisée en ce que le** tracé d'arête de coupe de la au moins une arête de coupe (9) est droit, incurvé et/ou en spirale, dans laquelle ledit tracé s'étend en particulier de manière parallèle à l'axe central imaginaire (M) ou forme un angle fini avec l'axe central imaginaire (M).

8. Tête de fraisage (1) selon l'une quelconque des revendications précédentes,
**caractérisée en ce que**
a) la valeur de l'angle d'enlèvement de copeau (α) négatif dans la région de la première extrémité d'arête de coupe (11) est comprise entre au moins 10° et au plus 19°, de manière préférée entre au moins 12° et au plus 17°, de manière préférée entre au moins 14° et au plus 16°, de manière préférée est de 15°, et/ou dans la région de la seconde extrémité d'arête de coupe (13) est comprise entre au moins 20° et au plus 30°, de manière préférée entre au moins 22° et au plus 28°, de manière préférée entre au moins 24° et au plus 26°, de manière préférée est de 25° ; et/ou **en ce que**
b) le premier angle de dépouille (β) dans la région de la première extrémité d'arête de coupe (11) est compris entre au moins 5° et au plus 10°, de manière préférée entre au moins 6° et au plus 8°, de manière préférée est de 7°, et/ou dans la région de la seconde extrémité d'arête de coupe (13) est compris entre au moins 15° et au plus 20°, de manière préférée entre au moins 16° et au plus 18°, de manière préférée est de 17°.

9. Tête de fraisage (1) selon l'une quelconque des revendications précédentes,
**caractérisée en ce qu'**une seconde surface de dépouille, à laquelle est associé un second angle de dépouille qui est de manière préférée supérieur au premier angle de dépouille (β) partout le long du tracé d'arête de coupe, est raccordée à la première surface de dépouille (17) sur le côté périphérique.

10. Tête de fraisage (1) selon la revendication 9, **caractérisée en ce que** le seconde angle de dépouille est constant le long du tracé d'arête de coupe et est de manière préférée compris entre au moins 16° et au plus 21°, de manière préférée entre au moins 17° et au plus 19°, de manière préférée est de 18°.

11. Tête de fraisage (1) selon l'une quelconque des revendications précédentes, **caractérisée en ce que** la tête de fraisage (1) présente un corps de base (19), dans laquelle la au moins une arête de coupe (9) est réalisée
directement sur le corps de base (19), ou
sur un insert de coupe (21) relié au corps de base (19), de manière préférée soudé au corps de base (19).

12. Fraise à billes (3), comprenant une tête de fraisage (1) selon l'une quelconque des revendications 1 à 11.

13. Procédé de production d'une arête de coupe (9) pour une fraise à billes (3), dans lequel
l'arête de coupe (9) est produite par meulage directement sur un corps de base (19) d'une tête de fraisage (1) ou sur un insert de coupe (21) destiné à une tête de fraisage (1), dans lequel
l'arête de coupe (9) est produite sous la forme d'une ligne de coupe entre une surface d'enlèvement de copeau (15) et une surface de dépouille (17), dans lequel
l'arête de coupe (9) est réalisée avec un angle d'enlèvement de copeau (a) négatif dont la valeur dans la région d'une première extrémité d'arête de coupe (11) tournée vers une extrémité (5), située côté travail, de la tête de fraisage (1) présente une valeur différente de celle qu'elle présente dans la région d'une seconde extrémité d'arête de coupe (13) tournée vers une extrémité (7), située côté serrage, de la tête de fraisage (1), dans lequel
l'arête de coupe (9) est produite avec un angle de dépouille (β) qui présente dans la région de la première extrémité d'arête de coupe (11) une valeur différente de celle qu'il présente dans la région de la seconde extrémité d'arête de coupe (13), dans lequel
l'arête de coupe (9) est produite avec un angle de coin (γ) qui est constant le long d'un tracé d'arête de coupe de l'arête de coupe (9) entre la première extrémité d'arête de coupe (11) et la seconde extrémité d'arête de coupe (13), et dans lequel
la surface d'enlèvement de copeau (15) est produite de telle manière qu'une largeur de la surface d'enlèvement de copeau (15) dans la région de la première extrémité d'arête de coupe (11) est supérieure à ce qu'elle est dans la région de la seconde extrémité d'arête de coupe (13).

14. Procédé selon la revendication 13, **caractérisé en ce qu'**une tête de fraisage (1) selon l'une quelconque des revendications 1 à 11 est obtenue grâce à la production de l'arête de coupe (9).

15. Produit de programme informatique, comprenant des instructions lisibles par une machine, sur la base desquelles un procédé selon l'une quelconque des revendications 13 ou 14 est mis en œuvre lorsque le produit de programme informatique fonctionne sur un dispositif informatique conçu pour commander une rectifieuse.

16. Support de données, comprenant un produit de programme informatique selon la revendication 15 qui est stocké sur le support de données.

17. Rectifieuse permettant de produire une arête de coupe (9) pour une fraise à billes (3), dans laquelle l'arête de coupe (9) est produite par meulage directement sur un corps de base (19) d'une tête de fraisage (1) ou sur un insert de coupe (21) destiné à une tête de fraisage (1), dans laquelle la rectifieuse est conçue pour mettre en œuvre un procédé selon l'une quelconque des revendications 13 ou 14 avec un dispositif informatique sur lequel fonctionne un produit de programme informatique selon la revendication 15.
